# EUROPEAN PATENT APPLICATION

(11) **EP 1 785 389 A1**
(43) Date of publication of application: **16.05.2007**
(21) Application number: 06023364.0
(22) Date of filing: 09.11.2006
(51) Int. Cl.: B67D 5/14, B60S 5/02

(54) **Vehicle with transmitter and fuel supply system with receiver**

(30) Priority: 10.11.2005 JP 2005326137
(71) Applicant: NISSAN MOTOR CO., LTD., Yokohama-shi Kanagawa-ken (JP)
(72) Inventor: Sasaki, Michiaki, Atsugi-shi Kanagawa 243-0192 (JP)
(74) Representative: Weber, Joachim

(57) **Abstract**

A vehicle (1) has a fuel tank (2), including: an allowable fuel supply quantity sensor (9) for sensing an allowable fuel supply quantity to the fuel tank and a vehicular transmitter (12) for transmitting information on the allowable fuel supply quantity sensed by the allowable fuel supply quantity sensor, to a fuel supplier (16) including: a receiver (20) for receiving the information on the allowable fuel supply quantity and a fuel stopper (18) for stopping the fuel supplying operation based on the information when the fuel supply quantity supplied to the vehicle reaches the allowable fuel supply quantity.

## Description

### BACKGROUND OF THE INVENTION

### Field of the Invention

The present invention relates to a vehicle provided with a fuel tank, a fuel supplier for supplying fuel to the fuel tank of the vehicle, a fuel supply system including the vehicle and the fuel supplier and a related method, where those described above are for stopping fuel supply.

### 2. Description of the Related art

Japanese Patent Application Laid-Open No 2004-59018 (= JP2004059018) discloses a fuel supply system for supplying fuel from a fuel supply port to a fuel tank of a vehicle at a fuel supply station and the like. When a fuel level goes beyond an automatic stop sensor which is disposed at a head end of a fuel supply gun, an automatic stop function of a fuel supplier stops fuel delivery to the fuel supply gun.

### SUMMARY OF THE INVENTION

It is an object of the present invention to provide a vehicle, a fuel supplier, a fuel supply system and a related method, where those provided above are for surely stopping fuel supply.

According to a first aspect of the present invention, there is provided a vehicle having a fuel tank, comprising: 1) an allowable fuel supply quantity sensor configured to sense an allowable fuel supply quantity to the fuel tank in an operation supplying a fuel to the fuel tank, and 2) a vehicular transmitter configured to transmit the following information to an outer part of the vehicle: the information on the allowable fuel supply quantity sensed by the allowable fuel supply quantity sensor.

According to a second aspect of the present invention, there is provided a fuel supplier for supplying a fuel to a vehicle, comprising: 1) a receiver configured to receive information on an allowable fuel supply quantity to the vehicle, the information being transmitted from the vehicle in a fuel supplying operation, and 2) a fuel stopper configured to stop the fuel supplying operation based on the information.

According to a third aspect of the present invention, there is provided a fuel supply system, comprising: I) a vehicle having a fuel tank, including 1) an allowable fuel supply quantity sensor configured to sense an allowable fuel supply quantity to the fuel tank in an operation supplying a fuel to the fuel tank, and 2) a vehicular transmitter configured to transmit the following information to an outer part of the vehicle: the information on the allowable fuel supply quantity sensed by The allowable fuel supply quantity sensor, and 11) a fuel supplier which is the outer part of the vehicle, the fuel supplier being configured to supply the fuel to the vehicle and including: 1) a receiver configured to receive the information on the allowable fuel supply quantity to the vehicle, the information being transmitted from the vehicle in the fuel supplying operation, and 2) a fuel stopper configured to stop the fuel supplying operation based on the information when the fuel supply quantity supplied to the vehicle reaches the allowable fuel supply quantity.

According to a fourth aspect of the present invention, there is provided a method for stopping fuel supply, comprising: 1) supplying a fuel from a fuel supplier to a vehicle having a fuel tank; 2) sensing an allowable fuel supply quantity to the fuel tank of the vehicle in the operation supplying the fuel to the fuel tank; 3) transmitting the following information from the vehicle to the fuel supplier: the information on the allowable fuel supply quantity sensed by the sensing operation; 4) receiving the information on the allowable fuel supply quantity to the vehicle, the information being transmitted from the vehicle to the fuel supplier in the fuel supplying operation; and 5) stopping the fuel supplying operation based on the information when the fuel supply quantity supplied to the vehicle reaches the allowable fuel supply quantity.

According to a fifth aspect of the present invention, there is provided a fuel supply system, comprising:I) transporting means having a fuel tanking means, including: 1) allowable fuel supply quantity sensing means for sensing an allowable fuel supply quantity to the fuel tanking means in an operation supplying a fuel to the fuel tanking means, and 2) vehicular transmitting means for transmitting the following information to an outer part of the transporting means: the information on the allowable fuel supply quantity sensed by the allowable fuel supply quantity sensing means; and II) fuel supplying means which is the outer part of the transporting means, the fuel supplying means being for supplying the fuel to the transporting means and including: 1) receiving means for receiving the information on the allowable fuel supply quantity to the transporting means, the information being transmitted from the transporting means in the fuel supplying operation, and 2) fuel stopping means for stopping the fuel supplying operation based on the information when the fuel supply quantity supplied to the transporting means reaches the allowable fuel supply quantity.

The other object(s) and feature(s) of the present invention will become understood from the following description with reference to the accompanying drawings.

### BRIEF DESCRIPTION OF THE DRAWINGS

Fig. 1 shows a structure of a fuel supply system (including a vehicle and a fuel supplier), according to an embodiment of the present invention.
Fig. 2 shows a perspective view of a first example for mounting an antenna to the vehicle, under the present invention.
Fig. 3 shows a flow chart of fuel supply control on the vehicle side.
Fig. 4 shows a flow chart of fuel supply control on the fuel supplier side.
Fig. 5 shows a perspective view of a second example for mounting the antenna to the vehicle, under the present invention.
Fig. 6 shows a perspective view of a third example for mounting the antenna to the vehicle, under the present invention.

### DETAILED DESCRIPTION OF THE PREFERRED EMBODIMENTS

In the following, various embodiments of the present invention will be described in detail with reference to the accompanying drawings.

For ease of understanding, the following description will contain various directional terms, such as left, right, upper, lower, forward, rearward and the like. However, such terms are to be understood with respect to only a drawing or drawings on which the corresponding part of element is illustrated.

Referring to the drawings, detailed description is to be made hereinafter, about i) a vehicle provided with a fuel tank, ii) a fuel supplier for supplying fuel to the fuel tank of the vehicle, and iii) a fuel supply system including the vehicle and the fuel supplier, according to an embodiment of the present invention. Herein, the term "fuel supply" signifies supplying or filling of fuel. In addition, the term "fuel" is herein defined as a liquid fuel, examples thereof including a gasoline supplied to a gasoline engine vehicle, a light oil supplied to a diesel engine vehicle, and the like.

### <Structure>

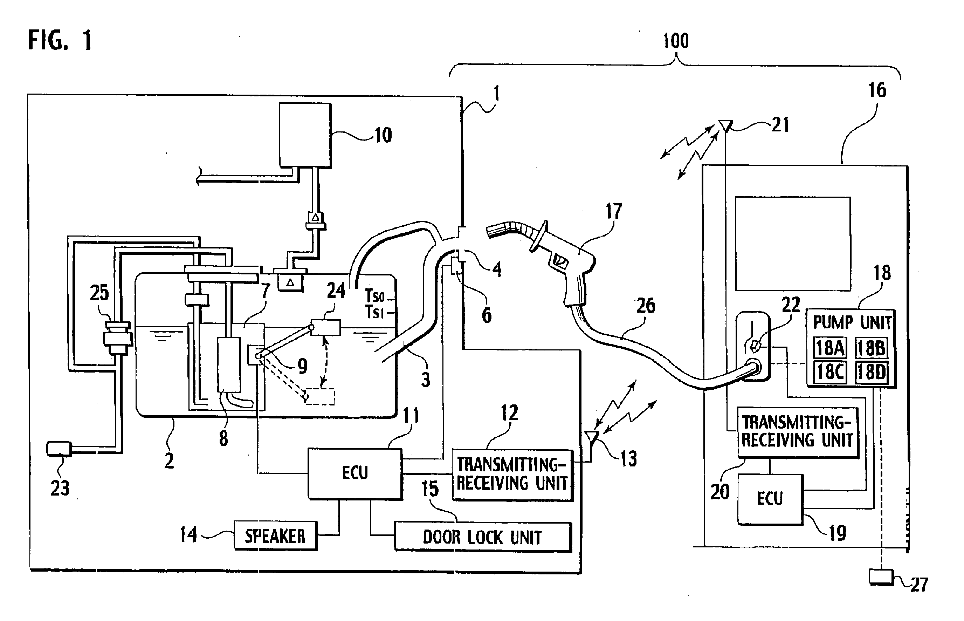

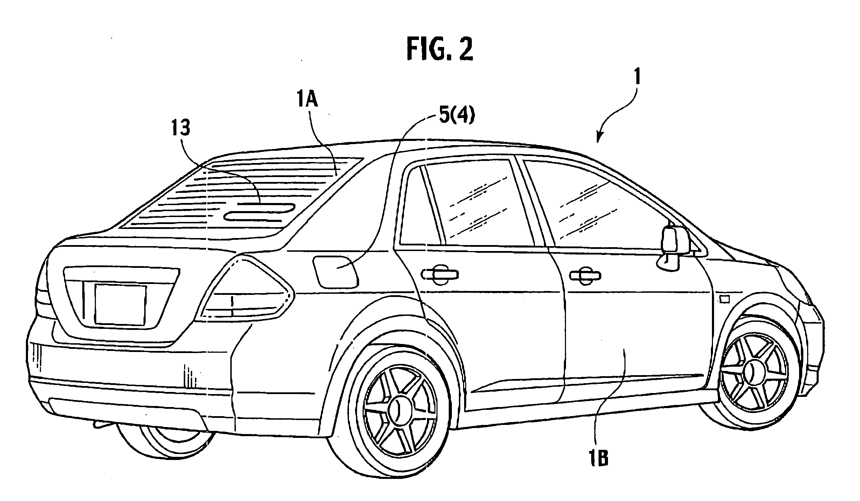

Fig. 1 shows a structure of a fuel supply system 100 including a vehicle 1 and a fuel supplier 16, according to the embodiment of the present invention. As shown in Fig. 1, the vehicle 1 is provided with a fuel tank 2. The fuel tank 2 connects to a fuel supply port 4 via a filler tube 3. The fuel supply port 4 is positioned on a side face of a body of the vehicle 1, and is ordinarily closed with a fuel cap (not shown in Fig. 1). Moreover, a fuel lid 5 (refer to Fig. 2) which is a part of a face united with the side face of the vehicle 1's body is closed on the fuel supply port 4. Operating a lever (not shown in Fig. 1 and Fig. 2) in the room of the vehicle 1 can open the fuel lid 5 according to the embodiment. In the vicinity of the fuel supply port 4, there is mounted an opening-closing sensor 6 for sensing an opening-closing state of the fuel lid 5.

In the fuel tank 2, there is disposed a pump unit 7 for delivering fuel to an engine 23. The pump unit 7 has a pump 8 for pumping up the fuel to the inner part. In addition, the pump unit 7 is provided with a remaining quantity sensor (fuel quantity sensor) 9 for sensing remaining quantity in the fuel tank 2. Referring to a float 24, the remaining quantity sensor 9 according to the embodiment senses position of fuel level. The fuel pumped up by the pump 8 is delivered to the engine 23 via a filter 25. The fuel tank 2 also has a canister 10 and the like for collecting volatile fuel in the fuel tank 2.

The remaining quantity sensor 9 connects to an electronically controlled control unit (ECU) 11, with the sensed remaining quantity to be operated (calculated) by the ECU 11. From the fuel tank 2's capacity (known) and the sensed remaining quantity (by the remaining quantity sensor 9), the ECU 11 calculates to what extent the fuel is fillable in the fuel tank 2, in other words, an allowable fuel supply quantity. Herein, the remaining quantity sensor 9 and the ECU 11 each function as an allowable fuel supply quantity sensor. An end fuel level T_{S0} in Fig. 1 denotes a state where the fuel tank 2 is full- In addition, a warning fuel level T_{S1} in Fig. 1 denotes a state where the fuel tank 2 is slightly lower in fuel quantity than the full state, in other words, warning the full state.

Moreover, a transmitting-receiving unit 12 connects to the ECU 11 and has an antenna 13 for transmitting a signal to an outer part and receiving a signal from the outer part. To the outer part (herein, especially an after-described fuel supplier 16) via the transmitting-receiving unit 12 and the antenna 13, the ECU 11 transmits: i) the allowable fuel supply quantity after the operation (calculation), ii) an end signal S0 generated when the fuel quantity in the fuel tank 2 is at the end fuel level T_{S0}, and iii) a warning signal S1 generated when the fuel quantity in the fuel tank 2 is at the warning fuel level T_{S1}, and iv) fuel type (gasoline, light oil, high octane gasoline, regular gasoline, or the like) of the vehicle 1. Herein, the ECU 11, the transmitting-receiving unit 12 and the antenna 13 each function as a vehicular transmitter. In addition, the remaining quantity sensor 9 sensing that the fuel quantity in the fuel tank 2 is at the end fuel level T_{S0} is equivalent to sensing a fuel quantity suppliable to the fuel tank 2, thus making each of the remaining quantity sensor 9 and the ECU 11 an allowable fuel supply quantity sensor.

In addition, the ECU 11, the transmitting-receiving unit 12 and the antenna 13 sense that the fuel supply is stopped when receiving a stop signal S2 from the after-described fuel supplier 16. In other words, the ECU 11, the transmitting-receiving unit 12 and the antenna 13 each also function as a fuel stop sensor. In addition, a speaker (notifier) 14 also connects to the ECU 11. The speaker 14 is mounted to give sound or voice information to a vehicular driver supplying the fuel. Moreover, the ECU 11 is interconnected with a door lock unit 15. The door lock unit 15 controls locking or unlocking of the vehicle 1. From the door lock unit 15 to the ECU 11, a signal signifying locking or unlocking state of a door 1B is transmitted.

Then, the fuel supplier 16 is to be explained. The fuel supplier 16 is disposed at a fuel supply station (not shown in Fig. 1 and Fig. 2). Ordinarily, one fuel supply station has a plurality of fuel suppliers 16. Herein, one of the fuel suppliers 16 is show in Fig. 1. The fuel supplier 16 has a fuel supply gun 17 to be inserted into the fuel supply port 4 of the vehicle 1. A hose 26 connects fuel supply gun 17 to a body of the fuel supplier 16. A pump unit 18 in the fuel supplier 16 delivers the fuel to the fuel supply gun 17. The pump unit 18 incorporates therein: i) a pump 18A, ii) a valve 18B for starting or stopping the fuel delivery, iii) a flowmeter 18C for sensing a fuel delivery quantity (fuel supply quantity per unit period: fuel supply rate), and iv) a control part 18D for controlling the fuel supply quantity per unit period, and the like. The fuel supply quantity per unit period may be controlled referring to valve 18B's opening or the pump 18A's drive quantity. The pump unit 18 and the ECU 19 each function as a fuel stopper and a fuel flow rate controller.

The pump unit 18 pumps up the fuel from an underground tank 27 embedded under the fuel supply station. The pump unit 18 connecting to the ECU 19 for controlling the fuel delivery of the fuel supplier 16 is controlled by the ECU 19. A transmitting-receiving unit 20 on the fuel supplier 16 side connects to the ECU 19, and has an antenna 21 for transmitting a signal to the vehicle 1 and receiving a signal from the vehicle 1. Via the transmitting-receiving unit 20 and the antenna 21, the ECU 19 receives the signal from the vehicle 1 and transmits to the vehicle 1 the stop signal S2. Herein, the ECU 19, the transmitting-receiving unit 20 and the antenna 21 each function as a transmitter or a receiver of the fuel supplier 16. In addition, a sensing switch 22 for sensing whether or not the fuel supply gun 17 is stored in the fuel supplier 16 connects to the ECU 19.

Fig. 2 shows a perspective view of a first example for mounting the antenna 13 to the vehicle 1, according to the embodiment of the present invention. For transmitting and receiving the signals in combination with the fuel supplier 16, the antenna 13 is preferably positioned in the vicinity of the fuel supplier 16. In view of the above operation, the antenna 13 is preferably positioned in the vicinity of the fuel supply port 4 (the fuel lid 5). In Fig. 2, the antenna 13 is embedded (sealed or printed) at a lower part on the fuel supply port 4 side of a rear glass 1A of the vehicle 1. Positioning the antenna 13 on the outwardly exposed rear glass 1A is preferable, causing no blockage of receiving of the signal. In addition, occasionally, a defogger wiring (not shown in Fig. 2) is printed on the rear glass 1A or an FM antenna (not shown in Fig. 2) is embedded in the rear glass 1A. In other words, printing the antenna 13 in combination with the defogger wiring or the FM antenna can decrease cost than printing the antenna 13 by another preparation step.

### <Flow chart>

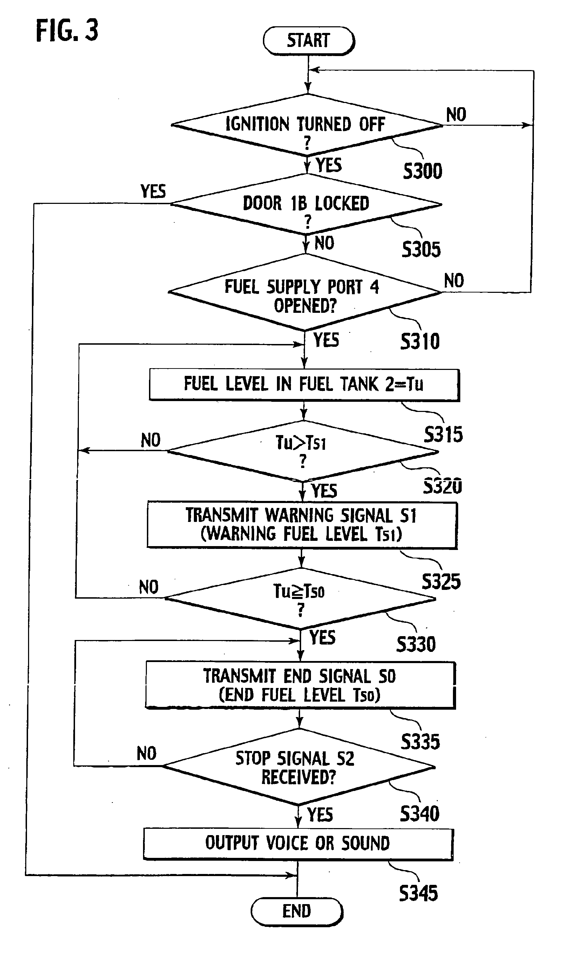

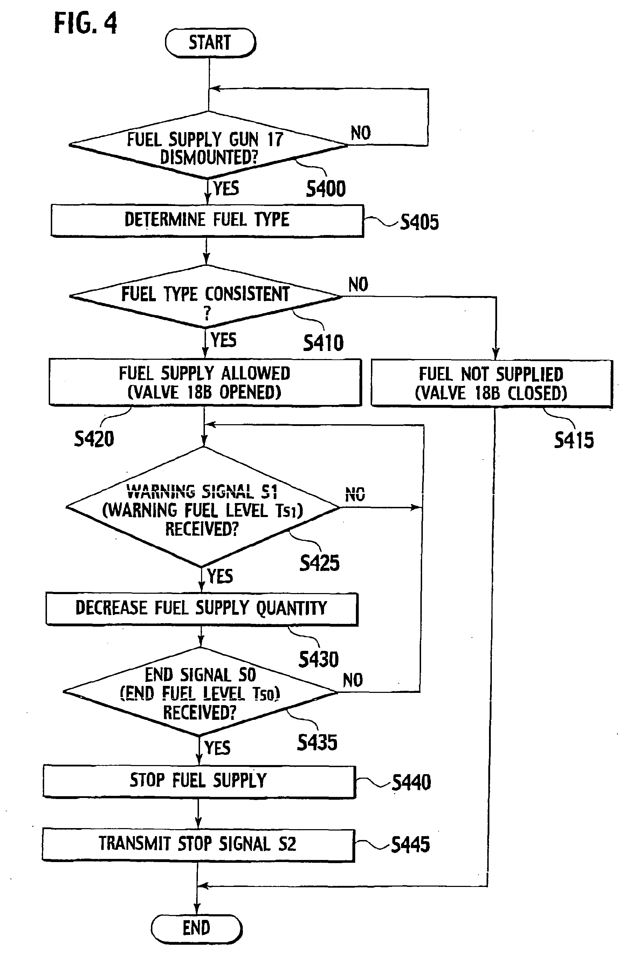

Then, based flow charts in Fig. 3 and Fig. 4, an explanation is made on fuel supply control by the fuel supply system 100 including the vehicle 1 and the fuel supplier 16. Fig. 3 shows a flow chart of fuel supply control on the vehicle 1 side. Fig. 4 shows a flow chart of fuel supply control on fuel supplier 16 side.

Herein, for supplying the fuel to the vehicle 1, there is provided the following first method:

### <First method>

1) calculating in advance the allowable fuel supply quantity on the vehicle 1 side based on the fuel tank 2's capacity (known) and the sensed remaining quantity (by the remaining quantity sensor 9), as described above,
2) transmitting the allowable fuel supply quantity from the vehicle 1 to the fuel supplier 16,
3) implementing the fuel supply at the fuel supplier 16 according to the allowable fuel supply quantity,
4) decreasing fuel supply quantity with the fuel supply quantity approaching the allowable fuel supply quantity, and
5) stopping the fuel supply with the fuel supply quantity reaching the allowable fuel supply quantity.

Moreover, there is provided the following second method:

### <Second method>

1) continuing the fuel supply by sensing, with the remaining quantity sensor 9, the fuel quantity remaining in the fuel tank 2 in the fuel supplying operation,
2) decreasing the fuel supply quantity at a time point when the fuel supplier 16 receives the warning signal S 1 which is transmitted from the vehicle 1 at the warning fuel level T_{S1}), and
3) stopping the fuel supply at a time point when the fuel supplier 16 receives the end signal S0 which is transmitted from the vehicle 1 at the end fuel level Tₛ₀.

Controlling operations for the fuel supply hereinafter shown in Fig. 3 and Fig. 4 are based on the second method, however, may be based on the first method.

In addition, the second method can be so made as to stop the fuel supply at the end fuel level T_{S0}, followed by slightly and gradually adding the fuel supply by a user (vehicular driver) observing inside the fuel supply port 4.

At first, explained based on the flow chart in Fig. 3 is about controlling the fuel supply-stop on the vehicle 1 side.

### (Step S300)

First, the routine monitors whether or not an ignition (not shown) is turned off.
* When Yes at step S300, the routine proceeds to step S305.
* When No at step S300, the routine returns to START.

### (Step S305)

Based on a signal from the door lock unit 15, the ECU 11 determines whether or not the door 1B is locked.
* When Yes at step S305, the routine determines that the turned off ignition is not for fuel supply, thus ending control.
* When No at step S305, the routine proceeds to step S310.

### (Step S310)

Based on a signal from the opening-closing sensor 6, the ECU 11 determines whether or not the fuel lid 5 (the fuel supply port 4) is opened.
* When Yes at step S310, the routine proceeds to step S315.
* When No at step S310, the routine cannot determine whether or not the turned off ignition is for fuel supply, therefore returns to step S300, followed by repeated operations up to step S310.
** If the door 1B is locked in this period (Yes at step S305), the routine ends the control.

### (Step S315)

The routine determines that the fuel is supplied to the fuel tank 2, thus sensing the remaining quantity in the fuel tank 2. Specifically, the remaining quantity sensor 9 senses fuel quantity (fuel level) Tu in the fuel tank 2. Then, the routine proceeds to step S320.

### (Step S320)

Then, the routine determines whether or not the sensed fuel level Tu is over the warning fuel level T_{S1}.
* When No at step S320, the routine returns to step S315, then continues sensing the fuel level Tu.
* When Yes at step S320 in the future such that the fuel level Tu is over the warning fuel level T_{S1}, the routine proceeds to step S325.

### (Step S325)

The routine transmits the warning signal S 1 to the fuel supplier 16.
After receiving the warning signal S1, the fuel supplier 16 decreases fuel supply quantity. Then, the routine proceeds to step S330.

### (Step S330)

The routine determines whether or not the sensed fuel level Tu is at the end fuel level T_{S0} or over.
* When No at step S330, the routine returns to step S315, then continues sensing the fuel level Tu.
* When Yes at step 330 in the future such that the fuel level Tu is at the end fuel level T_{S0} or over, the routine proceeds to step S335

### (Step S335)

The routine transmits the end signal S0 to the fuel supplier 16. After receiving the end signal S0, the fuel supplier 16 stops the fuel supply, then transmitting the stop signal S2 to the vehicle 1. Then, the routine proceeds to step S340.

### (Step S340)

The routine determines whether or not the vehicle 1 receives the stop signal S2.
* When No at step S340, the routine returns to step S335.
* When Yes at step S340, the routine proceeds to step S345.

### (Step S345)

The speaker 14 notifies the vehicular occupant (fuel supplying person) by sound or voice that the fuel supply is ended.

Then, explained based on the flow chart in Fig. 4 is about controlling the fuel supply-stop on the fuel supplier 16 side.

### (Step S400)

First, the routine monitors whether or not the fuel supply gun 17 is dismounted from the fuel supplier 16's body. The sensing switch 22 senses the monitoring.
* When Yes at step S400, the routine proceeds to step S405
* When No at step S400, the routine returns to START,

### (Step S405)

The routine determines fuel type to be supplied to the vehicle 1. Herein, the vehicle 1 has transmitted to the fuel supplier 16 a signal on the fuel type. Then, the routine proceeds to step S410.

### (Step S410)

The routine determines whether or not the sensed fuel type of the vehicle 1 is consistent with the fuel type to be supplied by the fuel supply gun 17 of the fuel supplier 16.
* When Yes at step S410, the routine proceeds to step S420.
* When No at step S410, the routine proceeds to step S415.

### (Step S415)

The valve 18B of the pump unit 18 is not opened, therefore not implementing the fuel supply, ending controlling of the flow chart in Fig. 4.

### (Step S420)

The valve 18B of the pump unit 18 is opened, thus starting the fuel supply. Then, the routine proceeds to step S425.

### (Step S425)

The routine monitors whether or not the fuel supplier 16 receives the warning signal S1 transmitted from the vehicle 1.
* When Yes at step S425, the routine proceeds to step S430.

### (StepS430)

The pump unit 18 decreases the fuel flow rate (fuel supply quantity per unit period). Then, the routine proceeds to step S435.

### (Step S435)

The routine monitors whether or not the fuel supplier 16 receives the end signal S0 transmitted from the vehicle 1.
* When Yes at step S435, the routine proceeds to step S440.
* When No at step S435, the routine returns to step S425.

### (Step S440)

The pump unit 18 stops the fuel supply. Then, the routine proceeds to step S445.

### (Step S445)

The transmitting-receiving unit 20 transmits the stop signal S2 to the vehicle 1. With the above operations, the fuel supplier 16 supplies the fuel to the vehicle 1.

From the remaining quantity in the fuel tank 2 and the fuel tank 2's capacity, the allowable fuel supply quantity is calculated. Based on the allowable fuel supply quantity, the fuel supply is implemented and thereafter can be surely ended with a proper fuel supply quantity. In addition, the vehicle 1 transmitting the warning signal S 1 at the time point when the fuel supply quantity approaches the allowable fuel supply quantity can be a warning for stopping the fuel supply at a proper timing, thus surely ending the fuel supply with a proper fuel supply quantity. Moreover, the vehicle 1 transmitting the end signal S0 at the time point when the fuel supply quantity reaches the allowable fuel supply quantity can surely stop the fuel supply with a proper fuel supply quantity. Moreover, the vehicle 1 notifying the vehicular occupant (fuel supplying person) that the fuel supply is stopped can rapidly end the fuel supplying operation. For clear notification, the sound or voice is preferable.

The fuel supplier 16 stopping the fuel supply at the time point when the fuel supply quantity reaches the allowable fuel supply quantity received from the vehicle 1. can surely end the fuel supply with a proper fuel supply quantity. Moreover, the fuel supplier 16 decreasing the fuel supply quantity per unit period when receiving the warning signal S 1 (which is transmitted from the vehicle 1 at a time point when the fuel supply quantity approaches the allowable fuel supply quantity) can be prepared for the fuel supply stop, and can surely end the fuel supply with a proper fuel supply quantity when stopping the fuel supply. Moreover, the fuel supplier 16 stopping the fuel supply when receiving the end signal S0 (which is transmitted from the vehicle 1 at a time point when the fuel supply quantity reaches the allowable fuel supply quantity) can surely stop the fuel supply at a proper timing. In addition, the fuel supplier 16 transmitting the stop signal S2 when stopping the fuel supply can easily notify the fuel supply stop.

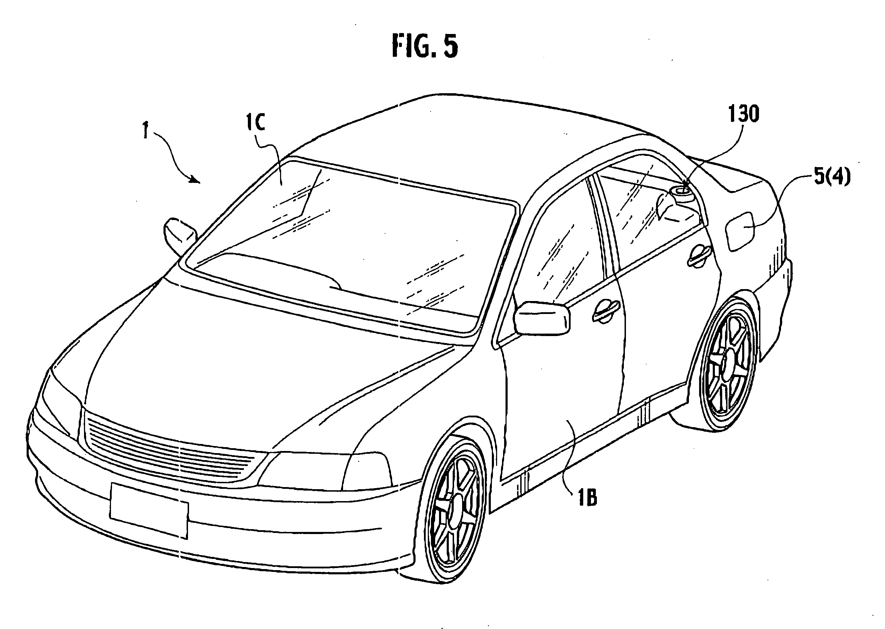

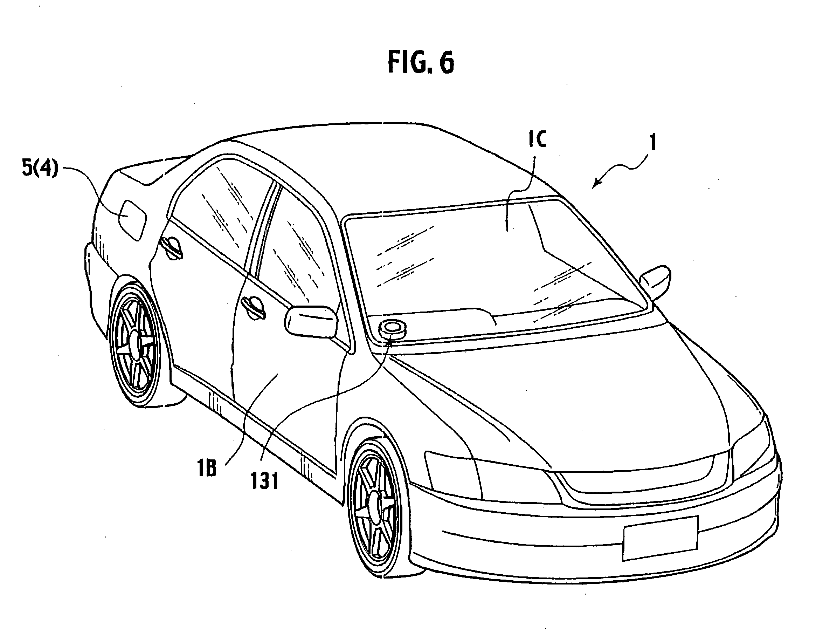

Fig. 5 and Fig. 6 show, respectively, a second example and a third example for mounting the antenna 13 to the vehicle 1. Fig. 5 shows the antenna unit 130 disposed in the vehicle 1. In this case, for the preferred disposition in the vicinity of the fuel supply port 4 (the fuel lid 5), the antenna 13 is disposed on a rear tray on the fuel supply port 4 side. Fig. 6 shows the antenna unit 13 integrated with another transmitting-receiving unit. Herein, an antenna function on the fuel supply is incorporated in an ETC unit 131. The ETC unit 131 is ordinarily disposed in the vicinity of the windshield 1C. In view of transmitting-receiving with the fuel supplier 16, however, the ETC unit 131 in Fig. 6 is disposed in the vicinity of the windshield 1C on the fuel supply port 4 (the fuel lid 5) side.

Although the present invention has been described above by reference to a certain embodiment, the present invention is not limited to the embodiment described above. Modifications and variations of the embodiment described above will occur to those skilled in the art, in light of the teachings.

Specifically, according to the embodiment, the speaker 14 notifying the vehicular driver of the fuel supply end is disposed on the vehicle 1 side, but may be disposed on the fuel supplier 16 side.

In addition, according to the embodiment, the vehicle 1's fuel type is transmitted to received as a signal, but may be character, mark, pattern (bar code) or the like which is disposed in the vicinity of the fuel supply port 4 and is readable by the fuel supply gun 17 inserted into the fuel supply port 4.

Moreover, according to the embodiment, the transmitting-receiving unit 20 and the ECU 19 each are provided for each of the plurality of fuel suppliers 16. However, implementing the transmitting-receiving or the signal processing concentratedly in the entire fuel supply station is allowed, with the result therefrom interchanged with the fuel suppliers 16. In this case, the fuel supplier 16 still has the transmitter and the receiver. In this case, however, for clarifying a pair of the vehicle 1 and the fuel supplier 16 (i.e., which vehicle 1 corresponding to which fuel supplier 16?), the vehicle 1 and the fuel supplier 16 are preferred to be individually telecommunicated at a short distance, leading to a better control.

This application is based on a prior Japanese Patent Application No P2005-326137 (filed on November 10, 2005 in Japan). The entire contents of the Japanese Patent Application No P2005-326137 from which priority is claimed are incorporated herein by reference, in order to take some protection against translation errors or omitted portions.

The scope of the present invention is defined with reference to the following claims.

## Claims

1. A vehicle (1) having a fuel tank (2), comprising:
1) an allowable fuel supply quantity sensor (9, 11) configured to sense an allowable fuel supply quantity to the fuel tank (2) in an operation supplying a fuel to the fuel tank (2), and
2) a vehicular transmitter (11, 12,13) configured to transmit the following information to an outer part (16) of the vehicle (1):
the information on the allowable fuel supply quantity sensed by the allowable fuel supply quantity sensor (9, 11).

2. The vehicle (1) as claimed in claim 1, further comprising:
a fuel quantity sensor (9) configured to sense a fuel quantity in the fuel tank (2),
wherein
the allowable fuel supply quantity sensor (9, 11) is configured to sense the allowable fuel supply quantity based on the followings:
1) a capacity of the fuel tank (2), and
2) the fuel quantity sensed by the fuel quantity sensor (9).

3. The vehicle (1) as claimed in claim 2, wherein
the vehicular transmitter (11, 12, 13) is configured to transmit a warning signal (S1) to the outer part (16) of the vehicle (1) when the fuel quantity sensed by the fuel quantity sensor (9) in the fuel supplying operation approaches the allowable fuel supply quantity.

4. The vehicle (1) as claimed in any of claim 2 to claim 3, wherein
the vehicular transmitter (11,12,13) is configured to transmit an end signal (S0) to the outer part (16) of the vehicle (1) when the fuel quantity sensed by the fuel quantity sensor (9) in the fuel supplying operation reaches the allowable fuel supply quantity.

5. The vehicle (1) as claimed in any of claim 1 to claim 4, further comprising:
1) a fuel stop sensor (11, 12, 13) configured to sense a step of the fuel supply to the fuel tank (2), and
2) a notifier (14) configured to notify a vehicular occupant of the fuel supply stop when the fuel stop sensor (11, 12, 13) senses the fuel supply stop.

6. The vehicle (1) as claimed in claim 5, wherein
the notifier (14) uses a sound or a voice for notifying the vehicular occupant of the fuel supply stop.

7. The vehicle (1) as claimed in any of claim 1 to claim 6, wherein
the vehicular transmitter (11, 12, 13) includes an antenna (13) which is embedded in or sealed to a rear glass (1A) of the vehicle (1).

8. The vehicle (1) as claimed in claim 7, wherein
the antenna (13) is disposed on a fuel supply port (4) side connected to the fuel tank (2).

9. A fuel supplier (16) for supplying a fuel to a vehicle (1), comprising:
1) a receiver (19, 20, 21) configured to receive information on an allowable fuel supply quantity to the vehicle (1), the information being transmitted from the vehicle (1) in a fuel supplying operation, and
2) a fuel stopper (18,19) configured to stop the fuel supplying operation based on the information.

10. The fuel supplier (16) as claimed in claim 9, further comprising:
a fuel flow rate controller (18, 19) configured to control a fuel supply quantity per unit period,
wherein
the fuel flow rate controller (18,19) is configured to decrease the fuel supply quantity in the following state 1:
state 1 where the fuel flow rate controller (18, 19) receives a warning signal (S1) which is transmitted from the vehicle (1) when the fuel supply quantity to the vehicle (1) in the fuel supplying operation approaches the allowable fuel supply quantity.

11. The fuel supplier (16) as claimed in any of claim 9 and claim 10, further comprising:
a fuel flow rate controller (18, 19) configured to control a fuel supply quantity per unit period,
wherein
the fuel flow rate controller (18, 19) is configured to stop the fuel supplying operation in the following state 2:
state 2 where the fuel flow rate controller (18, 19) receives an end signal (S0) which is transmitted from the vehicle (1) when the fuel supply quantity to the vehicle (1) in the fuel supplying operation reaches the allowable fuel supply quantity.

12. The fuel supplier (16) as claimed in claim 11, further comprising:
a transmitter (19,20,21) configured to transmit to the vehicle (1) information on a fuel supply state,
wherein
the transmitter (19, 20, 21) is configured to transmit a stop signal (S2) to the vehicle (1) when the fuel supplying operation is stopped.

13. A fuel supply system (100), comprising:
I) a vehicle (1) having a fuel tank (2), including:
1) an allowable fuel supply quantity sensor (9, 11) configured to sense an allowable fuel supply quantity to the fuel tank (2) in an operation supplying a fuel to the fuel tank (2), and
2) a vehicular transmitter (11, 12, 13) configured to transmit the following information to an outer part (16) of the vehicle (1):
the information on the allowable fuel supply quantity sensed by the allowable fuel supply quantity sensor (9, 11); and
II) a fuel supplier (16) which is the outer part (16) of the vehicle (1), the fuel supplier (16) being configured to supply the fuel to the vehicle and including:
1) a receiver (19, 20, 21) configured to receive the information on the allowable fuel supply quantity to the vehicle (1), the information being transmitted from the vehicle (1) in the fuel supplying operation, and
2) a fuel stopper (18, 19) configured to stop the fuel supplying operation based on the information when the fuel supply quantity supplied to the vehicle (1) reaches the allowable fuel supply quantity.

14. The fuel supply system (100) as claimed in claim 13, wherein
the vehicle (1) further comprises a fuel quantity sensor (9) configured to sense a fuel quantity in the fuel tank (2), and
the allowable fuel supply quantity sensor (9, 11) is configured to sense the allowable fuel supply quantity based on the followings:
1) a capacity of the fuel tank (2), and
2) the fuel quantity sensed by the fuel quantity sensor (9).

15. The fuel supply system as claimed in claim 14, wherein
the vehicular transmitter (11,12,13) is configured to transmit a warning signal (S1) to the fuel supplier (16) when the fuel quantity sensed by the fuel quantity sensor (9) in the fuel supplying operation approaches the allowable fuel supply quantity.

16. The fuel supply system as claimed in any of claim 14 to claim 15, wherein
the vehicular transmitter (11, 12, 13) is configured to transmit an end signal (S0) to the fuel supplier (16) when the fuel quantity sensed by the fuel quantity sensor (9) in the fuel supplying operation reaches the allowable fuel supply quantity.

17. The fuel supply system as claimed in any of claim 13 to claim 16, wherein
the vehicle (1) further comprises:
1) a fuel stop sensor (11, 12, 13) configured to sense a stop of the fuel supply to the fuel tank (2), and
2) a notifier (14) configured to notify a vehicular occupant of the fuel supply stop when the fuel stop sensor (11, 12, 13) senses the fuel supply stop.

18. The fuel supply system as claimed in claim 17, wherein
the notifier (14) uses a sound or a voice for notifying the vehicular occupant of the fuel supply stop.

19. The fuel supply system as claimed in any of claim 13 to claim 18, wherein
the vehicular transmitter (11, 12, 13) includes an antenna (13) which is disposed in a rear glass (1 A) of the vehicle (1).

20. The fuel supply system as claimed in claim 19, wherein
the antenna (13) is disposed on a fuel supply port (4) side with respect to a widthwise center of the vehicle (1).

21. The fuel supply system (100) as claimed in any of claim 13 to claim 20, wherein
the fuel supplier (16) further comprises:
a fuel flow rate controller (18,19) configured to control a fuel supply quantity per unit period, and
the fuel flow rate controller (18, 19) is configured to decrease the fuel supply quantity in the following state 1:
state 1 where the fuel flow rate controller (18, 19) receives a warning signal (S1) which is transmitted from the vehicle (1) when the fuel supply quantity to the vehicle (1) in the fuel supplying operation approaches the allowable fuel supply quantity.

22. The fuel supply system (100) as claimed in any of claim 13 to claim 21.
wherein
the fuel supplier (16) further comprises:
a fuel flow rate controller (18, 19) configured to control a fuel supply quantity per unit period, and
the fuel flow rate controller (18, 19) is configured to stop the fuel supplying operation in the following state 2:
state 2 where the fuel flow rate controller (18, 19) receives an end signal (S0) which is transmitted from the vehicle (1) when the fuel supply quantity to the vehicle (1) in the fuel supplying operation reaches the allowable fuel supply quantity.

23. The fuel supply system (100) as claimed in claim 22, wherein
the fuel supplier (16) further comprises:
a transmitter (19, 20, 21) configured to transmit to the vehicle (1) the information on the fuel supply state, and
the transmitter (19, 20, 21) transmits a stop signal (S2) to the vehicle (1) when the fuel supplying operation is stopped.

24. A method for stopping fuel supply, comprising:
1) supplying a fuel from a fuel supplier (16) to a vehicle (1) having a fuel tank (2);
2) sensing an allowable fuel supply quantity to the fuel tank (2) of the vehicle (1) in the operation supplying the fuel to the fuel tank (2);
3) transmitting the following information from the vehicle (1) to the fuel supplier (16):
the information on the allowable fuel supply quantity sensed by the sensing operation;
4) receiving the information on the allowable fuel supply quantity to the vehicle (1), the information being transmitted from the vehicle (1) to the fuel supplier (16) in the fuel supplying operation; and
5) stopping the fuel supplying operation based on the information when the fuel supply quantity supplied to the vehicle (1) reaches the allowable fuel supply quantity

25. A fuel supply system (100), comprising:
I) transporting means (1) having a fuel tanking means (2), including:
1) allowable fuel supply quantity sensing means (9, 11) for sensing an allowable fuel supply quantity to the fuel tanking means (2) in an operation supplying a fuel to the fuel tanking means (2), and
2) vehicular transmitting means (11,12,13) for transmitting the following information to an outer part (16) of the transporting means (1):
the information on the allowable fuel supply quantity sensed by the allowable fuel supply quantity sensing means (9, 11); and
II) fuel supplying means (16) which is the outer part (16) of the transporting means (1), the fuel supplying means (16) being for supplying the fuel to the transporting means (1) and including:
1) receiving means (19, 20, 21) for receiving the information on the allowable fuel supply quantity to the transporting means (1), the information being transmitted from the transporting means (1) in the fuel supplying operation, and
2) fuel stopping means (18, 19) for stopping the fuel supplying operation based on the information when the fuel supply quantity supplied to the transporting means (1) reaches the allowable fuel supply quantity.
